# EUROPEAN PATENT SPECIFICATION

(11) **EP 3 263 852 B1**
(45) Date of publication and mention of the grant of the patent: **20.03.2019**
(21) Application number: 17178900.1
(22) Date of filing: 30.06.2017
(51) Int. Cl.: F01K 9/00

(54) **SYSTEM AND METHOD FOR HEAT RECOVERY FROM EXHAUST GASES, IN PARTICULAR FOR A POWER PLANT, AND ADJUSTMENT PROCESS THEREOF**
SYSTEM UND VERFAHREN ZUR WÄRMERÜCKGEWINNUNG AUS ABGASEN, INSBESONDERE FÜR EIN KRAFTWERK, UND VERFAHREN ZUM EINSTELLEN VON DIESEM
SYSTÈME ET PROCÉDÉ DE RÉCUPÉRATION DE CHALEUR À PARTIR DE GAZ D'ÉCHAPPEMENT, EN PARTICULIER POUR UNE CENTRALE ÉLECTRIQUE, ET PROCÉDÉ D'AJUSTEMENT DE CELUI-CI

(30) Priority: 30.06.2016 IT UA20164791
(43) Date of publication of application: 03.01.2018
(73) Proprietor: METAN ALPI SESTRIERE TELERISCALDAMENTO S.R.L., 10139 Torino (IT)
(72) Inventor: CHIAVES, Andrea, I-10133 TORINO (IT); CHIAVES, Claudio, I-10128 TORINO (IT)
(74) Representative: Fioravanti, Corrado

(56) References cited:
- WO-A1-2016/051246
- WO-A2-2010/119318
- US-A1- 2010 072 292

## Description

### Technical sector

The present invention is generally in the field of civil or industrial plant engineering; in particular, the invention refers to a system and a process for heat recovery from combustion gases, in particular in an electric power production plant, and a related adjustment procedure.

### Prior art

Cogeneration plants are known in the art, wherein part of the heat generated by the production of electrical power is recovered by means of a circulation fluid, which is reintroduced into a distribution circuit, where it is then used to serve domestic or industrial users.

Conventionally, for example in the case of cogeneration units formed of internal combustion engines, the engine itself produces heat that must be dissipated and which is appropriately recovered by means of a special internal cooling circuit. Moreover, high-temperature combustion gases may in turn be utilized by means of an exchanger for heat recovery from the gases to further recover heat to use and feed into the distribution network.

Generally, the cogeneration unit and the gas exchanger use a primary circuit, connected to return and delivery manifolds of the heated fluid to and from the distribution network.

In particular, a first branch of the primary circuit will convey the circulation fluid to the cogeneration unit (and the respective exchangers), and hence the fluid will pass through the gas exchanger to absorb heat from the combustion gases. A second branch of the primary circuit will alternatively bring the fluid flow thus heated to the delivery manifold, from which the heated fluid will be distributed to the various users.

However, the gases exiting the recovery boiler still have a fraction of potentially recoverable enthalpic energy. Recovering this energy would increase the overall efficiency of the plant.

To recover the residual heat of the combustion gases, the return fluid flow from the distribution network may be used. In this way, this flow could cool the combustion gases, as the temperature is considerably lower. This solution, however, does not involve any significant increase in the efficiency of the plant.

In order to improve the efficiency of the system, the prior art contemplates the solution of connecting a heat pump to the return branch from the thermal user, such heat pump in turn being associated with a second exchanger positioned downstream of the recovery boiler.

WO 2016/051246 describes a solution wherein the heat pump heats the return flow from the heat source and sends it to the cogeneration unit so as to reach and maintain the maximum permissible temperature at the inlet of the cooling system of the internal combustion engine. In this case, the return flow from the thermal user is carried directly to the cogeneration unit and heated by the heat pump.

However, such a configuration involves various problems, as the temperature of the fluid circulating on the return branch from the user may oscillate significantly (even more than 10°C) in a relatively short time, and this has a very negative impact on the heat pump's performance, as the condenser finds itself working under very variable conditions. Therefore, the solution of applying the heat pump and the cogenerator to the return line from the thermal user proves to be very limited in terms of plant performance.

Moreover, the delivery temperature to the individual users downstream of the exchanger (which is dependent on the external temperature) is traditionally specified and adjusted by the user (regardless of external conditions), in a fixed manner (in the case of zone adjustment with metering with hour counter) or in a variable way, always at the customer's request, in the case of adjustment with thermal valves and distributors on radiators.

Alternatively, in the case of centralized adjustment, the delivery temperature to the users may generally be established by an external probe from a control unit according to a climatic adjustment curve that is dependent on the external conditions.

In general, however, the first solution (delivery at a constant temperature or not, based on customer requirements) requires delivery temperatures well above the optimum values. The probe adjustment, on the other hand, undergoes too much variation in temperature over the various times of the day and, in particular, between day and night.

Such limitations, understandably, prevent an optimal utilization of the plant, with negative effects on the environment and in terms of performance.

### Summary of the invention

An object of the present invention is to overcome the aforementioned problems by providing a solution for recovering part of the residual heat in the combustion gases downstream of the conventional gas exchanger, optimizing the operation of the heat pump.

To achieve this result, it is necessary to send to the heat pump a flow with a substantially constant temperature.

This is achievable by connecting the heat pump to the cogeneration plant by means of a closed circuit, decoupled from the fluid distribution circuit to the users. Decoupling takes place through a heat exchanger, hereinafter referred to as a separation exchanger, interposed between the service circuit to the users and the circuit connecting the heat pump to the cogenerator.

The inlet flow in the separation exchanger (on the side of the user service circuit) is modulated by a pump, so as to ensure a predetermined output temperature from the separator exchanger (from the side of the circuit connecting the heat pump to the cogenerator). In this way, the fluid temperature upstream of the heat pump may be adjusted and its operation may be optimized.

Therefore, unlike in the prior art, the heat pump does not heat the fluid on the return branch from the thermal users (which, given the oscillating temperature, would affect its proper operation), but acts on a different fluid, which circulates between the heat pump and the cogenerator.

More specifically, downstream of the primary cycle gas exchanger a second exchanger is connected, hereinafter also referred to as a low temperature gas exchanger or LT exchanger, connected to the evaporator of the heat pump by a circuit. A fluid is circulated between the second exchanger and the evaporator so as to absorb heat from the former and transfer it to the latter.

The evaporator extracts heat from the circulation fluid, lowering the temperature so that when the fluid has been sufficiently cooled, the latter is conveyed to the second exchanger where it will absorb heat from the combustion gases. Following this exchange, a (partial) condensation of the combustion gases occurs, with recovery of the related latent heat. After the circulation fluid has absorbed heat from the combustion gases in the second exchanger, such fluid is returned to the evaporator to which it will transfer the recovered heat.

Within the heat pump there is a loop circuit that connects the evaporator to a condenser. A working fluid absorbs in the evaporator the heat transferred from the fluid heated by the gases in the second exchanger and, through the condenser, returns the heat absorbed to the primary circuit (connecting the heat pump to the cogenerator). In this way, the heat pump acts as an intermediate device able to adjust the inlet temperature to the second exchanger, optimizing the thermal exchange and heat recovery of the gases to then transfer such heat to the primary circuit through the condenser.

At the same time, the primary circuit supplies the heat pump with a flow at a controlled temperature so that the plant may operate at a constant temperature, even with large variations in the return temperature from the thermal users. This temperature is adjusted, as has been said, by means of a separation exchanger, which decouples the primary circuit from the service circuit of the users. A pump adjusts the inlet flow to the exchanger from the users' side to maintain a predetermined outlet temperature from the exchanger on the side of the primary circuit.

Consider, for example, that the return temperature from the district heating network is maintained throughout the year at approximately 55°C. Such a value would allow the exhaust gases to be cooled as they exit the boiler, hypothetically from 120°C to 80°C, though such a recovery of energy is generally not very significant.

According to the invention, the flow in the circuit between the evaporator and the low temperature gas exchanger is further cooled (for example, below 25°C) by means of the heat pump's evaporator in order to send such cooled fluid to the new unit for recovering heat from the exhaust gases, which may then be cooled to temperatures on the order of 30-40°C. This has the twofold advantage of approximately doubling the significant heat recoverable from the gases and achieving the condensation of a portion of the water vapor contained in the exhaust gases, with recovery of the corresponding latent heat.

The heat extracted from the heat pump's evaporator is then transferred to the circuit connecting the heat pump to the cogenerator, together with the energy consumed by the motor of the heat pump itself.

Appropriately, a suitable thermal gradient between the inlet and outlet of the condenser itself is maintained at the same time. This last feature is particularly useful as the heat pump performance coefficient is largely dependent on the difference between the temperature at the evaporator inlet and the condenser outlet on the primary circuit side. Therefore, it is appropriate, on the one hand, to perform an adjustment of the plant and the heat pump so as to maximize the thermal recovery from the combustion gases and, on the other hand, to keep the heat pump output as high as possible, increasing the overall efficiency of the plant.

The aforementioned and other objects and advantages are achieved, according to an aspect of the invention, by a system and a process for recovering heat from combustion gases having the characteristics defined in the appended claims. Preferential embodiments of the inventions are defined in the dependent claims.

### Brief description of the figures

The functional and structural features of some preferred embodiments of a combustion heat recovery system and its adjustment procedure according to the invention will now be described. Reference is made to the appended figure, which is an illustrative diagram of a cogeneration plant associated with a heat pump according to an embodiment of the present invention.

### Detailed description

Before explaining in detail a plurality of embodiments of the invention, it should be clarified that the invention is not limited in its application to the details of construction and to the configuration of the components provided in the following description or illustrated in the drawings. The invention may assume other embodiments and may be implemented or achieved in essentially different ways. It should also be understood that the phraseology and terminology have descriptive purposes and should not be construed as limiting.

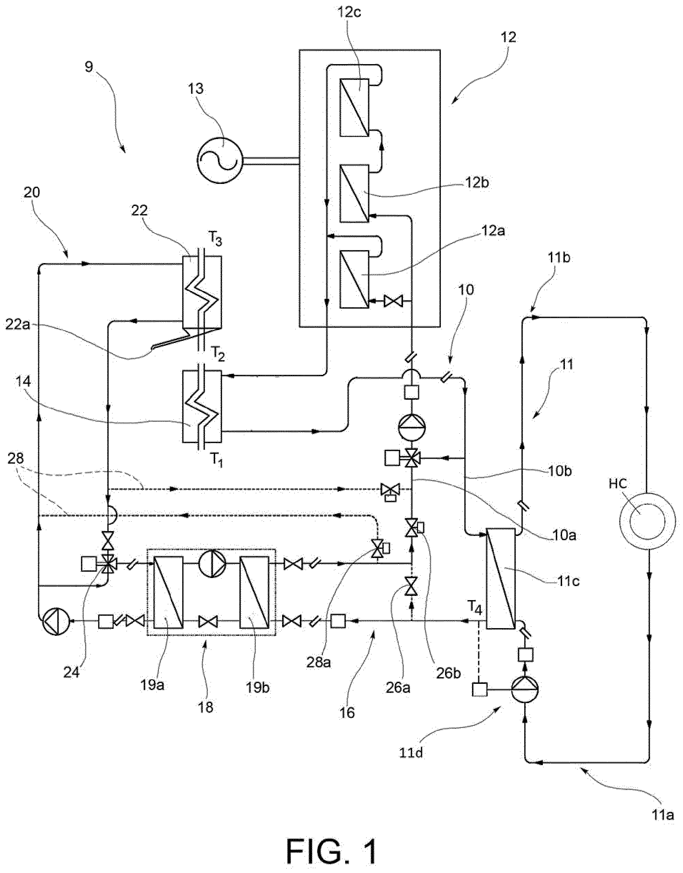

As illustrated by way of example in figure 1, a system 9 for heat recovery from combustion gases comprises a primary circuit 10, associated with a recovery boiler or first exchanger 14. High temperature combustion gases are made to pass through the first exchanger 14, of a type known per se, so that heat may be exchanged with a working or circulation fluid (usually hot water, saturated steam or superheated steam). By way of example, the gases initially have a temperature T₁, which is reduced to an outlet temperature T₂, lower than T₁, due to transfer to the circulation fluid of part of the heat from the gases.

A cogeneration unit 12 is placed upstream of the first exchanger 14 for the further recovery of the heat generated in the energy production process. In the illustrated example, the cogeneration unit 12 is associated with the cooling system of an internal combustion engine, according to known methods. In particular, the working fluid may be distributed by a first branch 10a of the primary circuit 10 to a series of engine cooling exchangers, for example an intercooler 12a, an exchanger for cooling the oil 12b, and an exchanger for cooling the water 12c.

Once passed into the cogeneration unit 12, the working fluid may be conveyed to the first exchanger 14 to be further heated.

The primary circuit 10 also connects the cogeneration unit 12 to a heat pump 18, which in turn comprises an evaporator 19a and a condenser 19b.

Furthermore, a secondary circuit 20 connects the heat pump 18 to a second exchanger or low temperature gas exchanger or LT exchanger 22, placed downstream of the first exchanger 14 and fed with the gases exiting the first exchanger 14. As already mentioned, in operation, the gases exiting at temperature T₂ from the first exchanger 14 re-enter the second exchanger 22, exiting therefrom at a temperature T₃ lower than T₂ due to the heat transferred to a fluid flow conveyable by the secondary circuit 20.

The secondary circuit 20 is configured to convey the heated flow from the second exchanger 22 to the evaporator 19a of the heat pump 18, where such flow may transfer heat to a technical fluid circulating in a loop within the heat pump 18. The flow cooled by the evaporator 19a may then be re-directed to the second exchanger 22.

The circulating technical fluid in the heat pump 18, after absorbing heat from the working fluid in the secondary circuit 20, may transfer the heat to the working fluid in the primary circuit 10 through the condenser 19b.

Through the evaporator 19a it is possible to adjust the temperature of the working fluid to the inlet of the second exchanger 22 so as to lower the temperature of the gases to appropriately cause their condensation. The condensate is optionally disposed of through a drain 22a.

The primary circuit 10 interacts with a distribution network 11 (for example, a district heating network) that may serve one or more users HC, to and from which the heated fluid may be conveyed by means, for example, of return and delivery manifolds 11a, 11b. In the illustrated example, the first branch 10a of the primary circuit 10 may convey the fluid to the first exchanger 14 after cooling the cogenerator, whereas a second branch 10b transports the fluid thus heated to the distribution network 11.

Between the primary circuit 10 and the distribution network 11, a separation exchanger 11c is interposed such that the fluid circulating in the primary circuit 10 is decoupled from the distribution network 11 and it is possible to maintain a constant inlet temperature to the condenser 19b of the heat pump 18, even in the presence of oscillations in the temperature of the fluid to the users HC. On the distribution circuit 11, upstream of the separation exchanger 11c, there is a pump 11d, appropriately associated with an inverter, which adjusts the inlet flow to the exchanger 11c. The adjustment takes place according to the fluid temperature of the distribution network 11 and a temperature T₄ that is to be output to the separation exchanger 11c on the side of the primary circuit 10. The pump 11d modulates the inlet fluid flow to the separation exchanger 11c so as to keep the temperature T₄ of the fluid in the primary circuit 10 constant, irrespective of the oscillations in the temperature of the fluid flow in the distribution network 10. Consequently, the fluid upstream of the condenser 19b of the heat pump 18 is at a constant temperature, which is different from the temperature of the fluid circulating in the distribution network 11, which, on the other hand, may vary considerably. In other words, by varying the inlet flow into the separation exchanger 11c on the side of the distribution network 11, as a function of the temperature of the fluid circulating in such distribution network 11, the dynamics of thermal exchange with the fluid in the primary circuit 10 may be modified so as to keep the temperature T₄ upstream of the heat pump 18 constant. In this way, a thermal decoupling occurs between the return branch 11a of the distribution network 11 and the recovery system 9 so that the heat pump 18 does not directly heat the return fluid from the thermal users in the distribution network 11 but a different fluid, at a controlled temperature, which flows in a separate circuit (primary circuit 10).

Therefore, the heat pump 18 and the cogenerator 12 (as well as the respective exchangers 14, 22) are reciprocally connected by a circuit separated from the distribution network 11, where a fluid circulates, the temperature of which is independent of the temperature of the fluid serving the users HC. In this way, the efficiency of the system 9 is optimized by operating the condenser 19b of the heat pump 18 in design conditions.

Appropriately, the heat pump 18 is configured to cool the fluid flow before it enters into the second exchanger 22, maintaining a predetermined temperature gradient between the inlet and outlet of the condenser 19b to and from the primary circuit 10. This adjustment allows the heat recovery from the exchanger with the performance coefficient of the heat pump to be balanced, achieving an increase in the efficiency of the plant.

Appropriately, a mixing valve 24 is associated with the secondary circuit 20, connectable to the evaporator outlet and configured to adjust the temperature of the fluid at the evaporator inlet 19a.

The mixing valve 24 is configured in such a way as to prevent the evaporator 19a from being sent water that is too hot (preferably the temperature of the flow at the outlet of the evaporator is less than 30°C). For this purpose, the mixing valve 24 starts working by sending a minimum flow to the evaporator, and then opening the water inlet to the evaporator 19a a little at a time until it is fully open with full optimization of the regime. The connection and operation of the valve in the manner described permits the flow of the fluid sent to the condensation exchanger 22 to be kept constant, avoiding the risk of overheating at the outlet.

Preferably, a first primary shut-off valve 26a is associated with the primary circuit 10 and may be choked so as to intercept at least part of the flow conveyed to the inlet of the condenser 19b by re-inserting it in the primary circuit 10. In this way, the heat pump 18 may be bypassed.

The operation of the system 9 may be adjusted in a number of ways, for example by connecting the primary circuit 10 to the secondary circuit 20 by means of offtakes 28, which make the heat pump 18 bypassable.

In particular, secondary shut-off valves 28a, 28b, 28c are associable to such offtakes, which, appropriately cooperating with the primary shut-off valve 26a, allow the operation of the heat pump 18 to be excluded or adjusted. In the illustrated example, the first and second secondary valves 28a and 28b, respectively associated with the offtakes 28 to and from the secondary circuit 20, are respectively proximal to the primary circuit 10, whereas the third secondary shut-off valve 28c, associated with the offtake 28 coming from the secondary circuit 20, is proximal to such secondary circuit.

For example, the system may operate with only the cogeneration unit 12, opening the primary shut-off valve 26a and closing the first and second secondary valves 28a and 28b, thus bypassing the heat pump and utilizing only the first exchanger 14. This configuration may be adopted, for example, at the system start-up to allow the heat pump to reach the optimization of the thermal regime.

Alternatively, by utilizing the second exchanger 22, but excluding the heat pump 18, the primary shut-off valve 26a and the first and second secondary valves 28a and 28b will be held open by holding closed the third secondary valve 28c and a second primary valve 26b, optionally placed in series with the primary valve 26a and upstream of the second secondary valve 28b on the primary circuit 10. Appropriately, the mixing valve 24 (or other shut-off valve on the secondary circuit 20) may be closed to block the inflow to the evaporator 19a.

To include also the heat pump 18, the primary valve 26a and the first and second secondary valves 28a and 28b may be closed by opening the third secondary valve 28c and the passage to and from the evaporator 19a. In this way, it will be possible to optimize the heat recovery from the combustion gases.

Depending on the return flow temperature from the users HC, different configurations of the plant may also be possible. For example, if the service fluid temperature to the users HC was less than or equal to a certain value, depending on the operating conditions of the recovery system 9 (e.g., a temperature of 55°C), the plant adjustment would be, by means of the flow variation by the pump 11d, such as to keep T₄ constant. By overcoming such threshold, it would also be possible to choke the heat pump 18 (appropriately reducing the compressor power) until it was completely excluded (through the offtakes 28) when the temperature was too high (e.g., above 60°C).

Furthermore, the percentage of recoverable heat from the low temperature exchanger 22 is directly dependent on the return temperature from the users and, consequently, on the delivery temperature which is, in turn, determined based on the external temperature.

In order to optimize the operation of the heat pumps, the return temperature of the district heating network should therefore be lowered as much as possible, and hence the return temperature from the users of the district heating network (for the maximum recovery of the heat of the gases) and made as stable as possible.

In order to overcome the problems of the prior art, a method for adjusting a system according to a solution which does not form part of the present invention comprises the step of determining the adjustment temperature to the users in advance, with respect to an operating period in which the temperature is to be adjusted for one or more users (i.e., in the absence of subsequent adjustments that intervene during the period of operation). For example, calibration may take place at the beginning of the day by setting a temperature at the delivery that will not be changed for the entire day of operation.

The calibration of the dispensing temperature to the user is based on an estimate of the external temperatures to which the users will be subject during the period of operation, which is based on the climatic data of previous periods relative to the said period of operation.

According to one embodiment, the dispensing temperature to the user for a given day may be calculated according to the temperature(s) (i.e., the average temperature) of the preceding twenty-four hours, optionally detectable by external probes associated with the users. According to a further embodiment, data on weather and weather information websites and the like may be used to capture external temperatures.

In relation to this estimated external temperature value, the specific delivery temperature is determined for each user, appropriately depending on the characteristics of each building (exposure, transmittance, occupancy rate, etc.).

Preferably, the delivery temperature is kept constant throughout the day, exploiting the thermal inertia of the dwelling itself, which would function as an accumulator.

In this way, the temperature variations between day and night, even in the most difficult situations, are practically imperceptible by the user and therefore the operation of the cogeneration plant is optimized.

In fact, the reduction in return temperature from users connected to district heating, due to the low delivery (and return) temperature, optimizes the efficiency of the heat pumps, allowing maximum recovery of heat through the condensation of the gases. All this ensures the maximum thermal comfort for the users.

Various aspects and embodiments of a system and a method according to the invention have been described. It is understood that each embodiment may be combined with any other embodiment. The invention, moreover, is not limited to the described embodiments, but may be varied within the scope defined by the appended claims.

## Claims

1. A system for heat recovery from exhaust gases, comprising:
- a cogeneration unit (12) associated with a first exchanger (14), such first exchanger being configured to allow a heat exchange between a fluid flow and an exhaust gas flow at a higher temperature;
- a heat pump (18), comprising an evaporator (19a) and a condenser (19b);
- a primary circuit (10) connecting the heat pump (18) to the cogeneration unit (12);
- a secondary circuit (20) connecting the heat pump (18) to a second exchanger (22), placed downstream of the first heat exchanger (14) and fed with the exhaust gas from said first heat exchanger (14), said secondary circuit (20) being adapted to convey a flow of fluid in such a way to exchange heat with said second exchanger (22) and the evaporator (19a) of the heat pump (18), said heat pump (18) being configured so as to cool the fluid flow before its entry into the second exchanger (22);
**characterized in that** it comprises a separation exchanger (11c), adapted to connect the primary circuit (10) to a heat distribution network (11) to one or more thermal users (HC), said separation exchanger (11c) being associated with a pump (11d), adapted to adjust the inlet flow to the separation exchanger (11c) on the side of said distribution network (11) so as to maintain constant and at a predetermined value the temperature of the fluid exiting the separation exchanger (11c) from the side of the primary circuit (10).

2. A system according to claim 1, wherein the pump (11d) is associated with an inverter.

3. A system according to claim 1 or 2, wherein a mixing valve (24) is associated with the secondary circuit (20), connected to the evaporator outlet and configured to adjust the temperature of the fluid at the evaporator inlet (19a).

4. A system according to claim 1 or 2, wherein a first shut-off valve (26a) is associated to the primary circuit (10), and may be choked so as to intercept at least part of the flow conveyed from the secondary circuit (16) toward the inlet of the condenser (19b), and to convey said flow toward the primary circuit (10).

5. A system according to any one of the preceding claims, wherein the primary circuit (10) and/or the secondary circuit (16) are connected to the secondary circuit (20) by means of offtakes (28), which make the heat pump (18) bypassable.

6. A process for heat recovery from exhaust gases, comprising the steps of:
a) connecting a primary circuit (10) to a cogeneration unit (12) and a first exchanger (14) configured to allow a heat exchange between a fluid flow and a flow of exhaust gases at a higher temperature;
b) connecting the primary circuit (10) to a heat pump (18);
c) connecting a secondary circuit (20) to the heat pump (18) and to a second exchanger (22) located downstream of the first exchanger (14);
d) feeding the second exchanger (22) with the exhaust gases exiting from said first exchanger (14);
e) circulating a flow in the secondary circuit (20) so as to exchange heat with the second exchanger (22) and an evaporator (19a) of the heat pump (18);
f) connecting, by means of a separation exchanger (11c), the primary circuit (10) to a distribution network (11) adapted to distribute heat to one or more users (HC);
g) adjusting, by means of a pump (11d), the inlet flow to the separation exchanger (11c) on the side of the distribution network (11), so as to maintain constant and at a predetermined value the temperature of the fluid exiting from the separation exchanger (11c) on the side of the primary circuit (10).

7. A process according to claim 6, comprising the step of cooling a fluid flow prior to its inlet into the second exchanger (22), maintaining a predetermined temperature gradient between the inlet and outlet of a condenser (19b), comprised in the heat pump (18), to and from the secondary circuit (16).

8. A process according to claim 6 or 7, comprising the step of adjusting the fluid temperature at the inlet of the evaporator (19a) to the second exchanger (22) by means of a mixing valve (24).

9. A process according to any one of claims 6 to 8, comprising the step of choking a first shut-off valve (26a) so as to intercept at least part of the flow conveyed by the secondary circuit (16) to the inlet of the condenser (19b), and to convey said flow to the primary circuit (10).

10. A process according to any one of claims 6 to 9, comprising the step of bypassing the heat pump (18) by means of offtakes (28) which connect the primary circuit (10) and/or the secondary circuit (16) to the secondary circuit (20).

## Patentansprüche

1. System zur Wärmerückgewinnung aus Abgasen, mit:
- einer Kraft-Wärme-Kopplung-Einheit (12), die einem ersten Tauscher (14) zugeordnet ist, wobei solch ein erster Tauscher ausgebildet ist zum Ermöglichen eines Wärmeaustauschs zwischen einem Fluidstrom und einem Abgasstrom bei einer höheren Temperatur;
- einer Wärmepumpe (18), die einen Verdampfer (19a) und einen Kondensator (19b) aufweist;
- einem Primarkreis (10), der die Wärmepumpe (18) mit der Kraft-Wärme-Kopplung-Einheit (12) verbindet;
- einem Sekundärkreis (20), der die Wärmepumpe (18) mit einem zweiten Tauscher (22) verbindet, der stromabwärts des ersten Wärmetauschers (14) platziert ist und der mit dem Abgas aus dem ersten Wärmetauscher (14) gespeist wird, wobei der Sekundärkreis (20) angepasst ist zum Leiten eines Stroms von Fluid auf solch eine Art und Weise, dass Wärme mit dem zweiten Tauscher (22) und dem Verdampfer (19a) der Wärmepumpe (18) ausgetauscht wird, wobei die Wärmepumpe (18) derart ausgebildet ist, dass sie den Fluidstrom vor dessen Eintritt in den zweiten Tauscher (22) abkühlt;
**dadurch gekennzeichnet, dass** es einen Abtrennungstauscher (11c) aufweist, der angepasst ist zum Verbinden des Primärkreises (10) mit einem Wärmeverteilernetzwerk (11) mit einem oder mehr thermischen Verbrauchern (HC), wobei der Abtrennungstauscher (11c) einer Pumpe (11d) zugeordnet ist, die angepasst ist zum Anpassen der Eingangsströmung in den Abtrennungstauscher (11c) auf der Seite des Verteilernetzwerks (11), so dass die Temperatur des Fluids, das aus dem Abtrennungstauscher (11c) auf der Seite des Primärkreises (10) austritt, konstant und bei einem vorgegebenen Wert gehalten wird.

2. System nach Anspruch 1, bei dem die Pumpe (11d) einem Inverter zugeordnet ist.

3. System nach Anspruch 1 oder 2, bei dem ein Mischventil (24) dem Sekundärkreis (20) zugeordnet ist, das mit dem Verdampferausgang verbunden ist und zum Einstellen der Temperatur des Fluids an dem Verdampfereinlass (19a) ausgebildet ist.

4. System nach Anspruch 1 oder 2, bei dem ein erstes Absperrventil (26a) dem Primärkreis (10) zugeordnet ist und gedrosselt werden kann, so dass wenigstens ein Teil des Stroms, der aus dem Sekundärkreis (16) zu dem Einlass des Kondensators (19b) geleitet wird, abgefangen wird und der Strom zu dem Primärkreis (10) geleitet wird.

5. System nach einem der vorhergehenden Ansprüche, bei dem der Primärkreis (10) und/oder der Sekundärkreis (16) mit dem Sekundärkreis (20) mittels Ableitungen (28), die die Wärmepumpe (18) umgehbar machen, verbunden sind.

6. Verfahren zur Wärmerückgewinnung aus Abgasen, mit den Schritten:
a) Verbinden eines Primärkreises (10) mit einer Kraft-Wärme-Kopplung-Einheit (12) und einem ersten Tauscher (14), der ausgebildet ist zum Ermöglichen eines Wärmeaustauschs zwischen einem Fluidstrom und einem Strom von Abgasen bei einer höheren Temperatur;
b) Verbinden des Primärkreises (10) mit einer Wärmepumpe (18);
c) Verbinden eines Sekundärkreises (20) mit der Wärmepumpe (18) und mit einem zweiten Tauscher (22), der sich stromabwärts des ersten Tauschers (14) befindet;
d) Speisen des zweiten Tauschers (22) mit den Abgasen, die aus dem ersten Tauscher (14) austreten;
e) Zirkulieren eines Stroms in dem Sekundärkreis (20), so dass Wärme mit dem zweiten Tauscher (22) und einem Verdampfer (19a) der Wärmepumpe (18) ausgetauscht wird;
f) Verbinden, mittels eines Abtrennungstauschers (11c), des Primärkreises (10) mit einem Verteilernetzwerk (11), das angepasst ist zum Verteilen von Wärme an einen oder mehrere Verbraucher (HC);
g) Anpassen mittels einer Pumpe (11d) des Eingangsstroms in den Abtrennungstauscher (11c) auf der Seite des Verteilernetzwerks (11), so dass die Temperatur des Fluids, das aus dem Abtrennungstauscher (11c) auf der Seite des Primärkreises (10) austritt, konstant und bei einem vorgegebenen Wert gehalten wird.

7. Verfahren nach Anspruch 6, mit dem Schritt zum Kühlen eines Fluidstroms vor dessen Eintritt in den zweiten Tauscher (22), Aufrechterhalten eines vorgegebenen Temperaturgradienten zwischen dem Einlass und Auslass eines Kondensators (19b), der in der Wärmepumpe (18) enthalten ist, zu und von dem Sekundärkreis (16).

8. Verfahren nach Anspruch 6 oder 7, mit dem Schritt zum Einstellen der Fluidtemperatur an dem Einlass des Verdampfers (19a) auf den zweiten Tauscher (22) mittels eines Mischventils (24).

9. Verfahren nach einem der Ansprüche 6 bis 8, mit dem Schritt zum Drosseln eines ersten Absperrventils (26a), so dass wenigstens ein Teil des Stroms, der von dem Sekundärkreis (16) zu dem Einlass des Kondensators (19b) geleitet wird, abgefangen wird und der Strom zu dem Primärkreis (10) geleitet wird.

10. Verfahren nach einem der Ansprüche 6 bis 9, mit dem Schritt zum Umgehen der Wärmepumpe (18) mittels Ableitungen (28), die den Primärkreis (10) und/oder den Sekundärkreis (16) mit dem Sekundärkreis (20) verbinden.

## Revendications

1. Système de récupération de chaleur à partir de gaz d'échappement, comprenant :
- une unité de cogénération (12) associée à un premier échangeur (14), un tel premier échangeur étant configuré pour permettre un échange de chaleur entre un flux de fluide et un flux de gaz d'échappement à une température plus élevée ;
- une pompe à chaleur (18), comprenant un évaporateur (19a) et un condenseur (19b) ;
- un circuit primaire (10) raccordant la pompe à chaleur (18) à l'unité de cogénération (12) ;
- un circuit secondaire (20) raccordant la pompe à chaleur (18) à un second échangeur (22) placé en aval du premier échangeur de chaleur (14) et alimenté en gaz d'échappement en provenance dudit premier échangeur de chaleur (14), ledit circuit secondaire (20) étant adapté pour acheminer un flux de fluide de manière à échanger de la chaleur avec ledit second échangeur (22) et l'évaporateur (19a) de la pompe à chaleur (18), ladite pompe à chaleur (18) étant configurée de sorte à refroidir le flux de fluide avant sa pénétration dans le second échangeur(22) ;
**caractérisé en ce qu'**il comprend un échangeur à séparation (11c), adapté pour raccorder le circuit primaire (10) à un réseau de distribution de chaleur (11) à un ou plusieurs utilisateurs de chaleur (HC), ledit échangeur à séparation (11c) étant associé à une pompe (11d), adaptée pour réguler le flux entrant vers l'échangeur à séparation (11c) du côté dudit réseau de distribution (11) de sorte à maintenir constante et à une valeur prédéterminée la température du fluide sortant de l'échangeur à séparation (11c) à partir du côté du circuit primaire (10).

2. Système selon la revendication 1, dans lequel la pompe (11d) est associée à un onduleur.

3. Système selon la revendication 1 ou 2, dans lequel une vanne mélangeuse (24) est associée au circuit secondaire (20), raccordée à la sortie d'évaporateur et configurée pour réguler la température du fluide au niveau de l'entrée de l'évaporateur (19a).

4. Système selon la revendication 1 ou 2, dans lequel une vanne d'isolement (26a) est associée au circuit primaire (10), et peut être étranglée de sorte à intercepter au moins une partie du flux acheminé à partir du circuit secondaire (16) vers l'entrée du condenseur (19b), et acheminer ledit flux vers le circuit primaire (10).

5. Système selon l'une quelconque des revendications précédentes, dans lequel le circuit primaire (10) et/ou le circuit secondaire (16) sont raccordés au circuit secondaire (20) au moyen de prises de soutirage (28) qui rendent la pompe à chaleur (18) contournable.

6. Procédé de récupération de chaleur à partir de gaz d'échappement, comprenant les étapes de :
a) raccordement d'un circuit primaire (10) à une unité de cogénération (12) et un premier échangeur (14) configuré pour permettre un échange de chaleur entre un flux de fluide et un flux de gaz d'échappement à une température plus élevée ;
b) raccordement du circuit primaire (10) à une pompe à chaleur (18) ;
c) raccordement d'un circuit secondaire (20) à la pompe à chaleur (18) et à un second échangeur (22) situé en aval du premier échangeur(14) ;
d) alimentation du second échangeur (22) en gaz d'échappement sortant dudit premier échangeur (14) ;
e) circulation d'un flux dans le circuit secondaire (20) de sorte à échanger de la chaleur avec le second échangeur (22) et un évaporateur (19a) de la pompe à chaleur (18) ;
f) raccordement, au moyen d'un échangeur à séparation (11c), du circuit primaire (10) à un réseau de distribution (11) adapté pour distribuer de la chaleur à un ou plusieurs utilisateurs (HC) ;
g) régulation, au moyen d'une pompe (11d), du flux entrant vers l'échangeur à séparation (11c) du côté dudit réseau de distribution (11) de sorte à maintenir constante et à une valeur prédéterminée la température du fluide sortant de l'échangeur à séparation (11c) sur le côté du circuit primaire (10).

7. Procédé selon la revendication 6, comprenant l'étape de refroidissement d'un flux de fluide avant son entrée dans le second échangeur (22), afin de maintenir un gradient de température prédéterminé entre l'entrée et la sortie d'un condenseur (19b), compris dans la pompe à chaleur (18), vers et à partir du circuit secondaire (16).

8. Procédé selon la revendication 6 ou 7, comprenant l'étape de régulation de la température de fluide à l'entrée de l'évaporateur (19a) vers le second échangeur (22) au moyen d'une vanne mélangeuse (24).

9. Procédé selon l'une quelconque des revendications 6 à 8, comprenant l'étape d'étranglement d'une première vanne d'isolement (26a) de sorte à intercepter au moins une partie du flux acheminé par le circuit secondaire (16) vers l'entrée du condenseur (19b), et acheminer ledit flux vers le circuit primaire (10).

10. Procédé selon l'une quelconque des revendications 6 à 9, comprenant l'étape de contournement de la pompe à chaleur (18) au moyen de prises de soutirage (28) qui raccordent le circuit primaire (10) et/ou le circuit secondaire (16) au circuit secondaire (20).
